# EUROPEAN PATENT APPLICATION

(11) **EP 4 765 022 A1**
(43) Date of publication of application: **24.06.2026**
(21) Application number: 24220911.2
(22) Date of filing: 18.12.2024
(51) Int. Cl.: G06T 11/00, G06T 11/60

(54) **METHOD OF IMAGE PROMPTING VIA GEN AI TOOLS, A COMPUTER PROGRAM PRODUCT, A NON-TRANSITORY COMPUTER-READABLE STORAGE MEDIUM, AS WELL AS AN ELECTRONIC COMPUTING DEVICE**

(71) Applicant: Siemens Aktiengesellschaft, 80333 München (DE)
(72) Inventor: Johnson, Rebecca, 81739 München (DE)
(74) Representative: Siemens Patent Attorneys

(57) **Abstract**

The invention relates to an automated method for image prompting by an electronic computing device via a Gen AI tool. Besides, the invention relates to a computer program product, an electronic computing device and a non-transitory computer readable storage medium. The present invention provides for the first time a method to sequential create an image by using a Gen AI engine by sequential prompting a multitude of layers and/or parts as primary images and combining the resulting in a secondary image.

## Description

### Technical Field

The invention relates to an automated method for image prompting by an electronic computing device via a Gen AI tool. Besides, the invention relates to a computer program product, an electronic computing device and a non-transitory computer readable storage medium.

### Background Art

Prompting Gen AI like Large Language Model "LLM" for an image is time consuming, because for using a chatbot like a GPT engine to generate an image, the required input is a textual, descriptive prompt. If the resulting image is not satisfactory, the user is obliged to refine the prompt and enter it in its entirety all over again. The system than produces new images and again, if not satisfactory, the user must extend or refine the same initial prompt until happy with the result. Often the user never arrives at a satisfactory result.

Another problem is the positioning within an image. This is because one of the current weaknesses, for example, is layouting. To prompt a LLM to create an image with object 1 "on the left" and object 2 "on the right" is rarely successful, and the layouting is performed in a manual second step in an image editing tool.

There is a need to provide a tool for prompting images for AI that makes it easier to tune the result.

### Summary of Invention

It is object of the present invention to introduce a spatial layering system into GenAl image creation software.

It is therefore object of the present invention to provide a method of sequentially generating an image by an electronic computing device using GenAl comprising the steps of
- First prompting a Gen AI engine to generate two or more primary images and/or
- Electing primary images out of available digital libraries as well as any other sources,
- Storage of all elected primary images as well as the results of generation of primary images in form of files, dataset and/or cloud-based,
- Further prompting a GenAl engine and/or manually interact with the electronic computing device to combine the elected and stored primary images in a suitable way to generate a secondary image according to the user's intention,
- Outputting of the generated secondary image as the finally generated image or intermediate result of the process and
- Optionally repeat and/or refine the process as specified above.

Especially a method of generating an image by an electronic computing device comprising the steps of
- First prompting a Gen AI engine to generate two or more primary images and/or
- Electing primary images out of available digital libraries as well as any other sources
- Storage of all elected primary images as well as the results of generation of primary images in form of files, dataset and/or cloud-based,
- Optionally placing each of the elected primary images on a separate layer,
- Optionally showing the separated elected primary images through an output device and/or as a print to a user and/or giving the user somehow the possibility to regard the separated or combined primary images,
- Optionally Refining of the primary images independently from each other according to user's intention,
- Further prompting a GenAl engine or manually interact with the electronic computing device to combine the elected and stored primary images in a suitable way to generate a secondary image according to the user's intention,
- Optionally showing the combined primary images resulting in a secondary image through an output device to a user and/or giving the user the possibility to
- Optionally refining, re-dimensioning and/or rearranging of primary images within the secondary image independently from each other, preferably according to user's intention,
- Optionally ranking of the results of suitable combinations,
- Optionally amending the combination of the primary images by response-prompting and/or by refining according to user's feedback,
- Optionally selecting the most suitable combination of the primary images to generate the secondary image,
- Outputting of the generated secondary image as the finally generated image or intermediate result of the process and
- Optionally repeat and/or refine the process as specified above.

This invention proposes for the first time a sequential prompting on to a multitude of layers. This is a method to overcome disadvantages of the presently known prompting of GenAl engines for the creation of images.

The "secondary image" is the image to be finally generated using GenAl. This secondary image is - according to the invention - divided into parts, called the primary images. These parts are - again exemplary - related to the side ground, background or foreground of the secondary image. One example of the present invention is that one or more primary images show different spatial levels of the secondary image.

Such a secondary image is accordingly the combination of two or more primary images, where the primary images are prompted and/or elected to reproduce different spatial levels and/or parts of the final secondary image. For example, the first primary image shows a general landscape, while a second primary image shows animals in a landscape, without showing the landscape itself. Further to this a third primary image - again being created by prompting a Gen AI engine, like all the other primary images - could possibly show the people being with the animals in this landscape, the third primary image itself neither showing landscape nor animals. A fourth primary image would be prompted to show the air, weather, birds and/or heaven of the secondary resulting image, again by itself not showing the subjects of the above mentioned first, second and third primary image.

On the other hand, the primary images could show each one a distinctive spatial level, like a first primary image could show a sunrise, the second primary image the ocean in front of the sunrise, the third a big steamship on the ocean, the fourth the beach and the fifth level something happening at the seaside representing the most upfront spatial level of the secondary image.

The difference to the prior art of prompting GenAl to generate images is the sequential prompting like, for example, prompting several spatial levels of an image.

Another example of the division of a resulting secondary image into different levels, each level being represented by a primary image could be a sunset, an ocean, a ship and so on.

Another example of a primary image may be just one part of the secondary image, like the left side, the upper corner etc. It may of course be both like being the background picture of the left upper corner of the resulting secondary image.

Having the primary images separated from the secondary final image, it will be possible to amend, change and/or improve each of these primary images representing one level, one part, one subject and/or one class of subjects being part of the finally resulting secondary image. Besides the chance of working on each of the primary images their combination resulting in the final secondary image, can be varied, like being amended, relocated, redoubled, adapted to another background, colored, refreshed and so on.

### Description of Embodiments

### Description of dependent claims and advantages

According to one embodiment of the present invention the method may be applied to generate a secondary image and also to divide a Gen AI generated secondary image into separate primary images by
- Identifying levels within the image showing separate parts or spatial layers of the image,
- Separating the identified parts of the image into separate primary images,
- Selecting one or more separate parts of the image,
- Postprocessing selected parts of the image
- Combining the separated parts of the image again to regain the desired secondary image.

Besides, it is possible to combine generated primary images originating from different and/or not necessarily connected sources to place it into the GenAl engine to use it for combination and/or generation of the final secondary image.

The present invention enables the user to use GenAl and LLM and at the same time to postprocess involving selecting and/or separating objects of the secondary image out again, refine them without disrupting the already satisfactory areas of the visual of the secondary image.

### Definitions:

"Gen Al" is used as name for Generative Artificial Intelligence, being a subset of artificial intelligence that uses generative models to produce images. These models learn the underlying patterns and structures of their training data and use them to produce new data based on the input, which often comes in the form of natural language prompts.

The term "prompting" is presently used for AI prompting. AI prompting involves communicating with the AI model to generate code, content, images and/or responses based on user input. By "prompting" the GenAl engine generates a result that reflects the creative, probabilistic nature of the generative process. Accordingly, it may be a necessity for the user or the thus-trained AI model to check whether the generated results meet the expectations. The AI model may be trained to output resulting images only with realistic natural content.

An "available computer library" for example is a memory unit with a number of dataset each representing a primary image and/or parts thereof. The dataset of a library may be reloaded locally, webbased within the Internet of Things "IoT" and/or cloud-based.

Digital data storage is the recording of information in a storage medium. A storage medium may be part of a local system or cloud-based. A system to carry out the method according to the present invention may contain special design software to store the information about the primary images and/or preferred combinations of primary images properly.

A "primary image" is any part, spatial level and/or layer as a part of a resulting secondary image. The primary image is manually and/or automatically identified and/or defined. The primary image is as a whole or parts thereof comprised within a secondary image. An identification of a primary image, for example, is completed either visually, acoustically and/or textually.

A "refinement" of the primary images may be done in any way. For example, one way to refine an existing primary image is executed by so called "response-prompting" of an Gen AI engine. These procedures are systematic strategies used to increase the probability of correct responding and opportunities for positive reinforcement and training for Gen AI engines by providing and then systematically removing prompts.

Besides and additionally, a refinement may include putting a filter on an image, change dimensions, change resolution, color it, etc.

A "suitable" combination of two or more primary images is e.g. any combination that
a) combines primary images to a secondary image as intended, with high quality e.g. in aesthetic appeal and/or technical execution and/or
b) combines any primary image in a - considering the specific use case - technical meaningful and intended way
c) satisfy "plausibility" of the combination referring to intended and/or defined qualities like being natural style, being realistic, surrealistic, romantic style, business style, reasonable from compilation and arranging, credible, rather natural or rather artificial looking.

A "suitable" combination for generating the desired secondary image is either manually or automatically selected. The automated selection considers a few key factors like
- evaluation how well the generated output aligns with the intended purpose of the prompt,
- evaluation how well the generated output is relevant for the secondary image,
- overall quality like aesthetic appeal and/or technical execution,
- uniqueness, consider how unique and original the generated content is compared to existing content and/or previous outputs,
- getting user feedback to understand user's preferences and perceptions and/or
- ensure the selected content does not contain any biases, harmful content or violation of ethical principles.

The "placing each of the primary images on a separate layer level" is done automatically by generating a separate image-level for each primary image produced by the Al model. This intermediate result of the prompting may be created digitally and shown on a monitor or similar module. Besides, this result may be stored in a storage unit of the electronic computing device and/or may be printed or saved as files on a local or cloud-based storage system. This allows easy access to top-ranked primary images of often used backgrounds like sunset, different landscapes, cities and/or "times of the year"-backgrounds each one being on a separate layer and separate level so it may - separately and independently from all other primary images adding up to the secondary image - be combined, relocated, refined, processed by the user and/or by the GenAl model.

According to another aspect of the present invention the identification of spatial levels may be prompted by Gen AI as well, e.g. by identification of perspectives and/or distances within the image.

The invention overcomes the disadvantage of presently known prompting of Large Language Models for Images. Instead of using current GPT engines to generate images, where the required input is a textual, descriptive prompt, the invention proposes to prompt primary images showing parts and/or spatial levels or aspects of a secondary image being the final image that the user originally wanted. After creation of these primary images the system combines the primary images to visualize the secondary and final image. If the resulting image is not satisfactory, the user must not refine the prompt and enter it in its entirety all over again. According to the invention the user separates the primary image or primary images which do not meet the expectations and refines them, while leaving satisfactory parts of the final secondary image unchanged.

A spatial layering system as proposed by the present invention may be incorporated into the Gen Al image creation software.

### Brief Description of the Drawing

- Fig. 1: shows an image with different spatial levels.
- Fig. 2: shows an image with different parts of the final image represented by separate primary images.

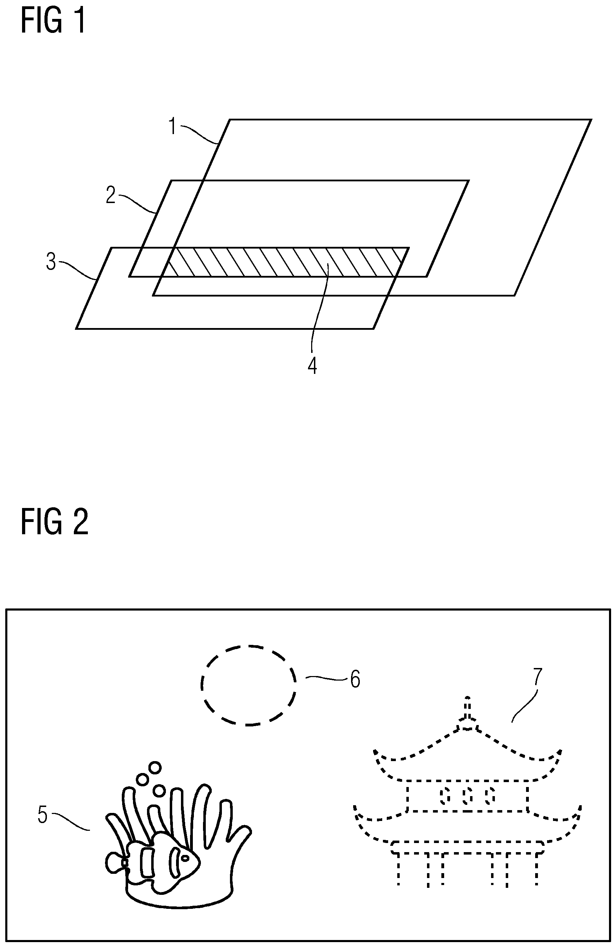

Figure 1 shows a final secondary image 4 comprising three different spatial layers 1,2 and 3. Each of the spatial levels is characterized by a distinctive frame or contour of the rectangle representing one primary image 1,2 or 3. The secondary image 4 itself is represented by the part 4 which is fully colored. The full coloring here means that all details of every previous primary image 1,2 and 3 is realized and represented in the secondary image 4.

Figure 2 shows how different parts of the final image may be created as primary images. Each primary image 5,6 and 7 is characterized again by a different frame or contour. Figure 2 now shows three primary images, like a picture of a fish as primary image 5, a picture of the moon as primary image 6 and picture of an Asian temple as primary image 7. The three primary images 5,6 and 7 together add up to the final secondary image as shown in figure 2.

Up to now prompting Large Language Models for Images was extremely limiting. If the result has not been satisfactory, the user was obliged to prompt it all over again. For more complex images this was very time consuming and of course at the same time energy, capacity of processing units, memory units, devices units etc. consuming. Now the invention separates the creation of an image into a process with first process step of creation of several images each for each being possibly overdone, refined and/or newly created. Second process step is the combination of several primary, and possibly refined, images to fit all together generating a final secondary image, showing all of all primary images or only parts of some or all of the primary images. Both process steps, the first one of generating primary images and the second one of combining all or parts of them may be repeated as often as necessary to receive the satisfactory final secondary image as desired.

The present invention provides for the first time a method to sequential create an image by using a Gen AI engine by sequential prompting a multitude of layers and/or parts as primary images.

Independent of the grammatical term usage, individuals with male, female or other gender identities are included within the term.

## Claims

1. Method of sequentially generating an image by an electronic computing device using GenAl comprising the steps of
- First prompting a Gen AI engine to generate two or more primary images and/or
- Electing primary images out of available digital libraries as well as any other sources,
- Storage of all elected primary images as well as the results of generation of primary images in form of files, dataset and/or cloud-based,
- Placing each of the elected primary images on a separate digital layer,
- Further prompting a GenAl engine or manually interact with the electronic computing device to combine the elected and stored primary images in a suitable way to generate a secondary image according to the user's intention,
- Outputting of the generated secondary image as the finally generated image or intermediate result of the process and
- Optionally repeat and/or refine the process as specified above.

2. The method according to claim 1, further comprising the step of checking the separated elected primary images through an output device and/or a print.

3. The method according to claim 1 or 2, further comprising the step of regarding the combined elected primary images through an output device and/or a print.

4. The method according to one of the previous claims, further comprising the step of refining one or more of the primary images independently from each other.

5. The method according to one of the previous claims, further comprising the step of showing the combined primary images resulting in a secondary image through an output device and/or as a print to a user.

6. The method according to one of the previous claims, further comprising the step of refining, re-dimensioning and/or rearranging of the primary images within the secondary image independently from each other, preferably according to user's intention.

7. The method according to one of the previous claims, further comprising the step of ranking of the results of suitable combinations of primary images to assemble to the secondary image.

8. The method according to one of the previous claims, further comprising the step of automatically electing the most suitable combination of primary images.

9. The method according to one of the previous claims, further comprising the step of amending the combination of the primary images by response-prompting.

10. The method according to one of the previous claims, further comprising the step of refining the combination of the primary images by according to user's feedback.

11. The method according to one of the previous claims, further comprising the step of selecting the most suitable combination of the primary images to generate the secondary image.

12. The method according to one of the previous claims, further comprising the step of placing each of the elected primary images on a separate digital layer.

13. A computer program product containing computer-readable instructions for performing a method according to one of claims 1 to 12.

14. A non-transitory computer-readable storage medium comprising the computer program product according to claim 13.

15. An electronic computing device configured for performing a method according to any one of claims 1 to 12.

16. The electronic computing device according to claim 15, wherein the electronic computing device is configured as a component of a server system.
